Europäisches Patentamt

European Patent Office

Office européen des brevets

(19)

(11) **EP 1 202 931 B1**

(12) **EUROPÄISCHE PATENTSCHRIFT**

| | |
|---|---|
| (45) Veröffentlichungstag und Bekanntmachung des Hinweises auf die Patenterteilung:<br>**10.03.2004 Patentblatt 2004/11** | (51) Int Cl.[7]: **C01D 3/14**, C01D 3/06,<br>C01D 3/16 |
| (21) Anmeldenummer: **00956184.6** | (86) Internationale Anmeldenummer:<br>**PCT/EP2000/006706** |
| (22) Anmeldetag: **13.07.2000** | (87) Internationale Veröffentlichungsnummer:<br>**WO 2001/004052 (18.01.2001 Gazette 2001/03)** |

(54) **VERFAHREN ZUR AUFBEREITUNG VON SALZSOLE UND ALKALIHALOGENIDE, ERHALTEN AUS EINEM VERFAHREN ZUR AUFBEREITUNG VON SALZSOLE**

METHOD OF PREPARING BRINE AND ALKALI HALIDES, OBTAINED FROM A METHOD OF PREPARING BRINE

PROCEDE DE PREPARATION DE SAUMURE ET HALOGENURES ALCALINS OBTENUS A PARTIR D'UN PROCEDE DE PREPARATION DE SAUMURE

| | |
|---|---|
| (84) Benannte Vertragsstaaten:<br>**AT BE CH CY DE DK ES FI FR GB GR IE IT LI LU MC NL PT** | (74) Vertreter: **Graf von Stosch, Andreas, Dr. rer.nat.**<br>**Patentanwälte**<br>**Bosch, Graf v. Stosch, Jehle**<br>**Flüggenstrasse 13**<br>**80639 München (DE)** |
| (30) Priorität: **14.07.1999 DE 19932955** | |
| (43) Veröffentlichungstag der Anmeldung:<br>**08.05.2002 Patentblatt 2002/19** | (56) Entgegenhaltungen:<br>**EP-A- 0 492 727**     **US-A- 2 764 472**<br>**US-A- 5 587 083** |
| (73) Patentinhaber: **Salinen Austria AG**<br>**4820 Bad Ischl (AT)** | • **PATENT ABSTRACTS OF JAPAN vol. 017, no. 180 (C-1046), 8. April 1993 (1993-04-08) & JP 04 334553 A (KANEGAFUCHI CHEM IND CO LTD), 20. November 1992 (1992-11-20) in der Anmeldung erwähnt** |
| (72) Erfinder:<br>• **SCHLESINGER, Robert**<br>  **A-4210 Engerwitzdorf (AT)**<br>• **SAMHABER, Wolfgang**<br>  **A-4060 Leonding (AT)**<br>• **SCHWAIGER, Herbert**<br>  **A-4802 Ebensee (AT)**<br>• **KRENN, Karl**<br>  **A-4802 Ebensee (AT)** | • **RAMAN L P ET AL: "CONSIDER NANOFILTRATION FOR MEMBRANE SEPARATIONS" CHEMICAL ENGINEERING PROGRESS,US,AMERICAN INSTITUTE OF CHEMICAL ENGINEERS. NEW YORK, Bd. 90, Nr. 3, 1. März 1994 (1994-03-01), Seiten 68-74, XP000433566 ISSN: 0360-7275** |

**Beschreibung**

Die vorliegende Erfindung betrifft Verfahren zur Aufbereitung von Salzsole wobei Alkalihalogenid(e) erhalten werden.

Aus der Literatur sind zahlreiche Verfahren zur Aufbereitung von Salzsole mit dem Ziel der Anreicherung von Alkalihalogeniden, insbesondere Natriumchlorid, bekannt. Wenn reines Siedesalz gewonnen werden soll, müssen - je nach Zusammensetzung des Salzlagers - die Nebenbestandteile der Sole entfernt werden. Insbesondere werden in der Literatur Wege aufgezeigt, die unerwünschten Sulfat- und Carbonatsalze aus der Sole abzutrennen. Hierbei werden Oxidations-, Kälkungs- und chemische Reinigungsmethoden unterschieden.

Bei der Oxidationsmethode wird die Sole intensiv belüftet, wodurch Eisen und Mangan als unlösliche Hydroxide ausgefällt werden. Auch Calcium und Magnesium werden in Form ihrer Carbonate abgeschieden.

Bei der Kälkungsmethode wird die Sole auf ungefähr 80°C erwärmt und Kalkmilch hinzugefügt. Es scheiden sich dann $CaSO_4$ bzw. $CaSO_4.1/2\ H_2O$ und $Mg(OH)_2$ ab.

Unter den chemischen Reinigungsmethoden ist insbesondere die Kalksodareinigung zu erwähnen, die bewirkt, daß Magnesium vollständig als $Mg(OH)_2$ ausgefällt und Sulfat teilweise als $CaSO_4$ niedergeschlagen wird. Der Sodabestandteil führt zu einer Abscheidung von Calcium als $CaCO_3$. Weiterhin wurde im Stand der Technik vorgeschlagen, die bei Verwendung von Eindampfanlagen anfallende Mutterlauge als Fällungsagens nutzbar zu machen. Insbesondere sulfatreiche und calciumarme Solen erlauben es, durch den hohen Sulfatgehalt der Mutterlauge $CaSO_4$ in der Sole auszufällen, während durch zusätzliche Kalkzugabe beispielsweise darüber hinaus $Mg(OH)_2$ niedergeschlagen werden kann.

Die ausgefällten Verunreinigungen können durch Absitzenlassen oder auch durch Filter von der insoweit gereinigten Sole entfernt werden.

In der Literatur finden sich weiterhin zahlreiche Zitate, die sich mit dem Verdampfen des Wassers aus der gereinigten Sole, dem sogenannten Eindampfen der Sole, befassen. Neben der schon seit längerem bekannten Verwendung offener Pfannen kann die Verdampfung auch unter Verwendung von mehrstufigen Verdampfungsanlagen ausgeführt werden, wobei in diesem Fall eine bessere Ausnutzung des Heizdampfes erzielt wird. Dies wird dadurch möglich, daß Brüden vom ersten Verdampfer zur Erhitzung des zweiten Verdampfers bzw. Brüden des zweiten Verdampfers zur Erhitzung des dritten Verdampfers eingesetzt werden. Gleich- oder Gegenstrombetrieb ist vorstellbar.

Die vorgenannten Verfahren weisen jedoch den Nachteil auf, daß entweder erhebliche Mengen an Fällungsmitteln dem Aufbereitungsprozeß zugeführt werden müssen oder - im Falle der direkten Verwendung der Mutterlauge - etwaige Salzverunreinigungen, vor allem Kalium und Bromid, gleichfalls in die aufzubereitende Salzsole und somit später in die Verdampfungsanlagen zurückgeführt werden. Derartige Verunreinigungen beeinträchtigen schließlich die Qualität des in den Verdampfern auskristallisierenden Salzes.

Um einen hohen Reinheitsgrad bei den auskristallisierenden Salzen zu erreichen, wird im Stand der Technik die Abtrennung von Sulfationen aus Salzsole oder Mutterlauge behandelt. Dabei wird insbesondere auf den Einsatz von Ionenaustauschern zur Abtrennung von Sulfatanionen abgestellt (japanische Druckschrift 04321514-A, japanische Druckschrift 04338110-A, japanische Druckschrift 04334553, US 4556463, US 304415677). Die in den vorgenannten Druckschriften beschriebenen Ionenaustauschverfahren zur weitestgehenden Reduktion der Sulfatanionenkonzentration sind jedoch insoweit von Nachteil, als erhebliche Kosten durch die Bereitstellung der Ionenaustauscher (z.B. der Ionenaustauscherharze) auftreten, so daß eine wirtschaftlich sinnvolle Verfahrensführung nicht möglich ist.

Wegen der hohen Kosten sind auch thermische Verfahren zur Verwertung (z.B. Ausfrieren des Natriumsulfats, anschließende Gewinnung von NaCl durch Eindampfen der sulfatreduzierten Lösung und Gewinnung des Kaliumchlorids durch abschließende Kühlung) der Mutterlauge in praxi ausgeschlossen.

Um aus wirtschaftlichen Gründen Phasen- oder Druckänderungen vermeiden zu können, werden Membrantrennmethoden eingesetzt, soweit dies technisch möglich ist. Beispielhaft zu erwähnen wären die Umkehrosmose, Nanofiltration, Ultrafiltration und Mikrofiltration, wobei bei allen vorgenannten Trennverfahren der wirksame Druck zwischen Retentat und Permeat die treibende Kraft im Trennprozeß darstellt.

In der Druckschrift US 5587083 werden Nanofiltrationsverfahren zur Aufreinigung konzentrierter wäßriger Salzlösungen, insbesondere auch zur Beseitigung von Sulfatanionen aus Sololösungen, vorgeschlagen. Dabei wurde festgestellt, daß die eingesetzten Nanofiltrationsmembranen Membranrückhaltekoeffizienten (bestimmt durch die Gleichung $R=1-C_P/C_R$, wobei $C_P$ für die Konzentration der betrachteten Komponente im Permeat und $C_R$ für die Konzentration der betrachteten Komponente im Retentat stehen) für Sulfatanionen oberhalb von 95% aufweisen. Im Ergebnis führt dies zu Sulfatanionenkonzentrationen im Permeat, die auf weniger als 1/20 der Sulfatanionenkonzentration in der Ausgangssole erniedrigt sind. Dagegen weisen die gemäß US 5587083 eingesetzten Nanofiltrationsmembranen nur geringfügige Membranrückhaltekoeffizienten für die einwertigen Ionen $Na^+$ und $Cl^-$ auf, so daß die jeweiligen Natriumchloridkonzentrationen im Permeat und Retentat mit jener in der Ausgangssolelösung vergleichbar sind.

Die Lehre der US 5587083 sieht somit vor, Nanofiltrationsschritte zur weitgehenden Eliminierung von zweiwertigen Ionen, insbesondere Sulfatanionen, als Maßnahme zur Beseitigung von Verunreinigungen vor der Kristallisation des Salzes, z.B. NaCl, in den Verfahrensprozeß einzufügen. Hierdurch werden zwar zweiwertige Ionen aus der Sole vor der Kristallisation entfernt, und es kann auch auf Fällungsmittel, wie z.B. Bariumchlorid, zur Fällung von Sulfatanionen verzichtet werden. Allerdings erweist sich eine derartige Vorgehensweise insbesondere bei hohen Calciumkonzentrationen in den Ausgangssolelösungen als nachteilig. Darüber hinaus werden die im Verfahrensprozeß anfallenden Nebenprodukte, wie z.B. die Mutterlauge, in der US 5587083 keiner sinnvollen verfahrensspezifischen Verwertung zugeführt, insbesondere die Mutterlaugen stellen aber ein ernsthaftes ökologisches Problem bei der Soleaufbereitung dar.

Aufgabe der vorliegenden Erfindung ist es, unter Beachtung des Kreislaufprinzips, Verfahren bereitzustellen, bei denen Nebenprodukte der Soleaufbereitung, insbesondere zweiwertige Anionen, als Fällungsmittel zur Reinigung von Rohsole nutzbar gemacht werden, wobei gleichzeitig sowohl eine hohe Salzausbeute, die Abscheidung unerwünschter Rohsolebestandteile als auch die Vermeidung ökologisch bedenklicher Nebenprodukte erreicht werden soll. Insbesondere ist es daher auch Aufgabe der vorliegenden Erfindung durch selektive Trennverfahren zu verhindern, daß sich unerwünschte Salzverunreinigungen in den der Kristallisation von z.B. NaCl dienenden Verdampfern akkumulieren. Weiterhin ist es eine Aufgabe der vorliegenden Erfindung, Alkalihalogenid(e), insbesondere NaCl, bereitzustellen, das (die) sich durch einen niedrigen Gehalt an Verunreinigungen auszeichnen und gleichzeitig durch ein aufgrund optimaler Ausnutzung von verfahrensspezifischen Nebenprodukten kostengünstiges, dem Kreislaufprinzip unterliegendes Verfahren erhalten werden.

Die Lösung dieser Aufgaben erfolgt durch ein Verfahren nach Anspruch 1.

Erfindungsgemäß wird ein Verfahren offenbart, das vorsieht, daß

(a) zweiwertige Kationen durch einen oder mehrere Fällungsschritte aus der Salzsole abgeschieden werden,
(b) die gemäß (a) vorbehandelte Salzsole einer Ein- oder Mehrstufenverdampfung unterzogen wird,
(c) die bei (b) auftretende Mutterlauge durch Nanofiltration in Retentat und Permeat aufgetrennt wird, wobei
(d) das Retentat als Fällungsagens bei (a) eingesetzt wird.

Damit wird durch ein erfindungsgemäßes Verfahren in effizienter Weise etwa die kostengünstige Herstellung hochreiner Alkalihalogenide, insbesondere von NaCl, sichergestellt. Die nach dem ein- oder mehrstufigen Verdampfungsschritt (b) erhaltene Mutterlauge wird durch einen Nanofiltrationsschritt (c) in Retentat und Permeat aufgetrennt. Die in erfindungsgemäßer Weise eingesetzten Nanofiltrationsmembranen erlauben, die Bestandteile der Mutterlauge in ein Retentat mit einer erhöhten Konzentration an zweiwertigen Ionen, im vorliegenden Fall insbesondere an Sulfatanionen, und in ein Permeat aufzutrennen. Sofern das Erfordernis der Aufrechterhaltung des Donnan-Gleichgewichts erfüllt ist, entsprechen aufgrund der weitgehend ungehinderten Diffusion von einwertigen Ionen deren jeweilige Konzentrationen im Permeat weitgehend auch deren Konzentrationen im Retentat, wobei eine geringfügig unterschiedliche Mobilität von Kalium- und Natriumionen besteht. Typischerweise enthalten die bei den herkömmlichen Eindampfprozessen auftretenden Mutterlaugen hohe Konzentrationen an Natriumsulfat, Kaliumchlorid bzw. Kaliumbromid. Indem die Permeatvolumina die Volumina des Retentatstroms in der Größenordnung übersteigen, kann erreicht werden, daß ein Großteil der einwertigen Ionen aus der Mutterlauge entfernt und damit dem gemäß Verfahrensschritt (d) vorgesehenen Rückfluß des Retentats in die Rohsolelösungen entzogen wird.

Insbesondere ist es für das erfindungsgemäße Verfahren vorteilhaft, wenn jene Inhaltsstoffe der Mutterlauge im Retentatstrom weitestgehend reduziert werden, die Verunreinigungen für das Salz darstellen. So ist beispielsweise weitestgehend zu vermeiden, daß auch Kalium- und/oder Bromidionen im Retentat gemäß Verfahrensschnitt (a) rückgeführt werden. Durch geeignete Wahl von Parametern im Trennschnitt (c) kann die Permeation gewisser, im Retentat nicht erwünschter Ionen sogar gegen deren Konzentrationsgradienten erreicht werden. Dies wäre etwa durch entsprechende Einstellung der Sulfatkonzentration möglich, um die Bromidkonzentration im Permeat zu erhöhen. Durch das erfindungsgemäße Verfahren ist somit eine weitere Separierung einwertiger Ionen gewährleistet, die damit wiederum der Verwertung zugänglich sind.

Die charakteristischen Ionenselektivitäten von Nanofiltrationsmembranen sind auf unterschiedliches Lösungs- und Transportverhalten der hydratisierten Ionen in der aktiven Membranstruktur zurückzuführen. Das charakteristische Diffusionsverhalten der jeweiligen Ionen ist abhängig von deren spezifischen Mobilitäten, also z. B. von deren Größe in den jeweiligen Lösungssystemen. Einwertige Ionen permeieren aufgrund ihrer geringeren Größe im hydratisierten Zustand wesentlich leichter als mehrwertige Ionen. Die Permeabilität einer Nanofiltrationsmembran nimmt für Anionen beispielsweise in der Reihenfolge Carbonat, Sulfat, Hydroxid, Chlorid, Nitrat zu., Zweiwertige Ionen, wie z. B. Carbonat- und Sulfationen, werden demnach stärker von der Membran zurückgehalten als einwertige Ionen, wie z.B. Chloridanionen. Werden jedoch mehrwertige Ionen in den jeweiligen Lösungssystemen an der Anlagerung von Wassermolekülen in die Hydrathüllen gehindert, so hat dies zur Folge, daß diese mehrwertigen Ionen auf Grund ihrer kleineren Hydrathüllen ein erhöhtes Permeationsvermögen durch die Filtrationsmembran aufweisen. Nanofiltrationsmembranen, die für die vorliegende Erfindung zum Einsatz kommen können, sind z.B. die Membranen DESAL-5 (Osmonics-Desal, Vista, California, USA), NF-70, NF-50, NF-40 und NF-40HF-Membranen (FilmTee Corp., Minneapolis, Minnesota, USA), SO-600-Membran, (Toray, Japan) und NTR-7450 und NTR-7250-Membranen (Nitto Electric, Japan).

Das Retentat mit den erhöhten Konzentrationen an zweiwertigen Anionen, insbesondere Sulfatanionen, wird nunmehr gemäß Verfahrensschritt (d) als Fällungsagens der Rohsole zugeführt. Insbesondere können auf diesem Weg die unerwünschten Calciumbestandteile der Rohsole als Calciumsulfate abgeschieden werden. Denkbar ist weiterhin auch, daß - abhängig von der Zusammensetzung der Rohsole - ein oder mehrere weitere(s) Fällungsagenz(ien) vor, während oder nach dem erfindungsgemäßen Fällungsschritt (a) der Sole hinzugefügt werden. Sollte etwa eine erhöhte Magnesiumkonzentration in der Rohsole vorhanden sein, wäre eine zusätzliche Kalkzugabe zur Abscheidung von $Mg(OH)_2$ vorteilhaft. Im Anschluß an die $Mg(OH)_2$-Fällung kann dann vorteilhafterweise das Retentat mit seinem typischerweise hohen Sulfatanteil zur Abscheidung von Calciumsulfat zugeleitet werden.

In einer bevorzugten Ausführungsform des erfindungsgemäßen Verfahrens kann das gemäß Verfahrensschritt (c) abgetrennte Permeat entweder mindestens einer weiteren Nanofiltration oder aber einem oder mehreren Eindampfschritten mit ggf. einem oder mehreren nach- und/oder zwischengeschalteten Nanofiltrationsschritt(en) zugeführt werden. Auf diese Weise kann eine weitere Reduzierung der Konzentration an zweiwertigen Anionen, insbesondere Sulfatanionen, erreicht werden.

In einer weiteren bevorzugten Ausführungsform kann das nach einem oder mehreren Nanofiltrationsschritten erhaltene Permeat, das sich durch hohe Konzentration an $Na^+$, $K^+$, $Cl^-$ und/oder $Br^-$ auszeichnet, weiterbehandelt werden. So etwa kann das Permeat durch einen oder mehrere Verdampfungsanlagen durchgeleitet werden und dort eingedampft werden. Hierbei wird z.B. Natrium- und/oder Kaliumchlorid, insbesondere zunächst Natriumchlorid und dann Kaliumchlorid, durch konventionelles Auskristallisieren gewonnen. Auf diese Weise kann durch das erfindungsgemäße Verfahren eine ungewöhnlich hohe Salzausbeute erzielt werden. Mit Hilfe dieser bevorzugten Ausführungsform mit dem Ziel der zusätzlichen Salzgewinnung aus dem Permeat ist eine optimale Verwertung der noch in der Mutterlauge befindlichen monovalenten Ionen gewährleistet. Während also nach dem Stand der Technik die Gewinnung von beispielsweise Natrium- oder Kaliumchlorid durch die in der Mutterlauge vorhandene erhöhte Sulfatkonzentration gestört wäre, erlaubt das erfindungsgemäße Verfahren durch eine weitestgehende Abscheidung der Sulfatanionen mit Hilfe des/der Nanofiltrationsschritts/e auch die Salzgewinnung aus dem Permeat (also einem Folgeprodukt der Mutterlauge) - außerhalb des Hauptkreislaufs des erfindungsgemäßen Verfahrens. Ausbeuten an monovalenten Salzen von mehr als 95%, insbesondere von mehr als 98% der Konzentration an monovalenten Ionen in der Rohsalzlösung sind damit durch das erfindungsgemäße Verfahren sichergestellt. Darüber hinaus stehen auch die während der Verdampfung der filtrierten Mutterlaugen, also des Permeats, anfallenden Nebenprodukte (z.B. Brüden, Kondensat) einer Weiterverwertung, ggf. im Hauptkreislauf des erfindungsgemäßen Verfahrens, offen.

Nach der Nanofiltration kann das Permeat beispielsweise typischerweise zwischen 0,01 und 0,001 mol $Na_2SO_4$/kg $H_2O$, bevorzugt zwischen 0,008 und 0,003 $Na_2SO_4$/kg $H_2O$, und zwischen 0,1 und 0,9 mol KCl/kg $H_2O$ enthalten. Damit kann aus diesem Permeat NaCl durch Verdampfen gewonnen werden, indem dieses Permeat bis zu einem KCl-Gehalt von bis maximal 5,5 mol/kg $H_2O$ aufkonzentriert wird. Auch nach diesem Eindampfen liegt die $Na_2SO_4$-Konzentration mit Werten zwischen 0,1 und 0,01 mol/kg $H_2O$ noch deutlich unterhalb der Kristallisationsgrenze von ca. 0,2 mol/kg $H_2O$, so daß ein Auskristallisieren von $Na_2SO_4$ nicht zu befürchten ist. Im Ergebnis bedeutet dies, daß im ersten Durchlauf aus 1 t Mutterlauge mindestens 130 kg NaCl, vorzugsweise minde-stens 150 kg NaCl, und mindestens 15 kg, vorzugsweise mindestens 20 kg KCl, gewonnen werden können.

Das erfindungsgemäße Verfahren ist gleichzeitig auch deshalb äußerst vorteilhaft, weil es das ökologische Problem der Entsorgung der Mutterlaugen, die bei der Soleaufbereitung anfallen, löst. Die nach dem (den) Verdampfungsschritt(en) im Hauptkreislauf entstehenden Mutterlaugen werden durch den Trennschritt (c) entweder als Retentat stets im Kreislauf gehalten oder als Permeat weiterer Verdampfung zugeführt. Durch den im Permeat geringen Fremdionenanteil, insbesondere durch dessen niedrige Sulfationenbelastung, ergeben sich nur äußerst geringe Mengen an Mutterlaugen, die der Entsorgung zugeleitet werden müssen. Im Idealfall, also bei prozeßoptimierter Verfahrensführung, wird die Entstehung von Mutterlaugen völlig vermieden.

Weiterhin bevorzugt sind solche Verfahren, bei denen der Nanofiltrationsschritt einen Membranrückhaltekoeffizienten R von ≥ 90% für Sulfatanionen gewährleistet, wobei der Trennleistungsgrad mit der Sulfatanionenkonzentration und dem für die Trennung aufgebrachten Druck variiert. Insbesondere bevorzugt sind Verfahren, die die Sulfatabtrennung im Rahmen der Nanofiltration mit einem Membranrückhaltekoeffizienten von ≥ 95% sicherstellen. Gleichzeitig liegt der Membranrückhaltekoeffizient für monovalente Anionen, also etwa für Chlorid-Anionen, typischerweise zwischen 0 und 20%, bevorzugt zwischen 0 und 10% und besonders bevorzugt zwischen 0 und 5%.

Weiterhin bevorzugt sind Verfahren, die die Zusammensetzung bzw. die Konzentration der Bestandteile in der Mutterlauge beeinflussen. So kann z.B. die Mutterlauge vor dem (den) Nanofiltrationsschritt(en) durch Zugabe von Salzsole in bezug auf ihre Anionenkonzentrationen, insbesondere in bezug auf ihre Sulfatanionenkonzentrationen, verändert werden. Bei der der Mutterlauge zuzugebenden Salzsole wird es sich regelmäßig um die gemäß Verfahrensschritt (a) vorbehandelte Salzsole handeln, also die sich nach dem Fällungsschritt ergebende Reinsole. Denkbar ist aber auch die Zugabe von Rohsalzsole. Aber auch Brüden können aus der (den) Verdampfungsanlage(n) der Mutterlauge vor deren Nanofiltration zugeleitet werden. Außerdem kann das Kondensat aus der (den) Verdampfungsstufe (n) der Mutterlauge beigemischt werden. Je nach gewünschter Zusammensetzung der Mutterlauge kann der Zufluß der vorgenannten Nebenprodukte der Soleaufbereitung zur Mutterlauge eingestellt werden. Die vorgenannten Komponenten können sowohl einzeln als auch in beliebigen Kombinationen (z. B. Salzsole und Kondensat) mit der zu filtrierenden Mutterlauge vermischt werden. Typischerweise wird der aufzubereitenden Mutterlauge entweder ausschließlich Kondensat oder ausschließlich Reinsole zugeleitet. Hierbei weisen die Komponenten Mutterlauge und Kondensat bevorzugt ein Mischungsverhältnis (Gewicht) von 10:1 bis 10:3, besonders bevorzugt von 10:1 bis 10:1,5 auf. Im Fall von Mutterlauge und Reinsole liegt das Mischungsverhältnis bevorzugt bei 10:3 bis 10:5,5, besonders bevorzugt bei 10:4 bis 10:5.

Das erfindungsgemäße Verfahren dient zur Aufbereitung von Rohsalzsolen zur Gewinnung von Alkalihalogeniden, die in einer oder mehreren verdampfungsanlagen auskristallisieren. Ganz besonders bevorzugt ist das erfindungsgemäße Verfahren dann, wenn hierdurch Natrium- und/oder Kaliumchlorid zur Verwendung als Speise-, Vieh-, Streusalz oder als Ausgangsmaterial für andere Natriumverbindungen bzw. als Konservierungsmittel gewonnen werden. Hochreines NaCl, hergestellt nach dem erfindungsgemäßen Verfahren, kann darüber hinaus bei pharmazeutischen Anwendungen zum Einsatz kommen. Dabei ist es insbesondere bevorzugt, den Hauptkreislauf des erfindungsgemäßen Verfahrens derart zu führen, daß in den Verdampfungsanlagen des Hauptkreislaufs im wesentlichen reines oder hochreines Natriumchlorid auskristallisiert. Ganz besonders bevorzugt ist ein erfindungsgemäßes Verfahren, das die Gewinnung von Natriumchlorid mit einem Reinheitsgrad oberhalb von 95%, insbesondere oberhalb von 99%, vor allem oberhalb von 99,9% ermöglicht. Erfindungsgemäß wird dies unter anderem dadurch sichergestellt, daß das Retentat nach der Nanofiltration eine geringe Fracht an Kalium und Bromid aufweist. Bedingt durch die Kreislaufführung des erfindungsgemäßen Verfahrens sinkt der Kaliumgehalt in der Reinsole bzw. im Salz aus dem 1. Verdampfer im Hauptkreislauf um mindestens 40%, bevorzugt um mindestens 45% und besonders bevorzugt um mindestens 50%. Für Bromid gilt, daß in Reinsole bzw. im Salz aus dem Hauptkreislauf sich dessen Konzentrationen bevorzugt sogar um mindestens 50%, insbesondere um mindestens 55% reduzieren.

Das erfindungsgemäße Verfahren ist insbesondere dann vorteilhaft, wenn Lösungen einem Nanofiltrationsschritt unterzogen werden, deren Konzentrationen an anorganischen Salzen nahe an der Sättigungsgrenze liegen. Derartige Lösungssysteme sind vor allem erfindungsgemäß nach dem Eindampfen der Salzsole gemäß Verfahrensschritt (b) gegeben, wobei danach sehr hohe Chloridionenkonzentrationen in der Mutterlauge auftreten. Das erfindungsgemäße Verfahren stellt sicher, daß auch derartige hoch aufkonzentrierte Lösungssysteme mit Hilfe von Nanofiltrationsmethoden in Permeat und Retentat aufgetrennt werden können, so daß beispielsweise die isolierte Rückführung von Sulfatanionen im Retentat zur Rohsole möglich wird.

Dabei wird das Substrat bei Temperaturen von ca. 130°C im Verdampfer eingedampft. Nach Vermischen der Mutterlauge mit Kondensat und/oder Reinsole weist die Zulauflösung eine Temperatur zwischen 30 und 50°C, typischerweise ca. 40°, auf. Bei dieser Temperatur liegen die Sättigungsgrenzen für $Na_2SO_4$ bei ca. 0,6 mol $Na_2SO_4$/kg $H_2O$, für KCl bei ca. 1,2 mol KCl/kg $H_2O$ und für NaCl bei ca. 5 mol/kg $H_2O$. Die Zulauflösung ist mit NaCl im Bereich von 65 % bis 95 %, typischerweise zwischen 75 % und 90 % gesättigt.

Für $Na_2So_4$ wird ein Sättigungsgrad im Bereich von 60 bis 100 %, typischerweise 70 bis 90 %, in der Zulauflösung für die (Nano)-filtration erreicht. Die Konzentrationen von KCl in der Zulauflösung liegen zwischen 70 % und 100 % der Sättigungsgrenze. Typischerweise stellen sich aber unmittelbar an der Filtrationsmembran selbst noch Konzentrationsverschiebungen gegenüber den Ionenkonzentrationen in der Zulauflösung ein.

Weiterhin kann bevorzugt mit dem erfindungsgemäßen Verfahren auch die Permeation von in der Mutterlauge vorhandenen Bromidionen im Verfahrensschritt (c) gewährleistet werden. Eine geeignete Wahl der Parameter, z. B. der.Sulfatanionenkonzentration, erlaubt sogar die Diffusion von Bromidionen durch die Membran gegen den Konzentrationsgradienten derselben als Folge der spezifischen Potentialverhältnisse an der Membran. Zu beachten ist, daß das erfindungsgemäße Verfahren daher eine Reduktion der Bromidionenkonzentration im Retentat auch für den Fall sicherstellt, daß die Chloridkonzentration in der Mutterlauge die Bromidkonzentration deutlich, z. B. um das 10fache, bevorzugt um mindestens das 20fache, und besonders bevorzugt um mindestens das 80fache übertrifft.

Die vorliegende Erfindung stellt zudem Alkalihalogenid(e) bereit, die mit der Hilfe eines erfindungsgemäßen Verfahrens erhalten werden. Damit ist (sind) Alkalihalogenid(e) als Produkt eines Verfahrens, bei dem

(a) zweiwertige Kationen durch einen oder mehrere Fällungsschritte aus der Salzsole abgeschieden werden,

(b) die gemäß (a) vorbehandelte Salzsole einer Ein- oder Mehrstufenverdampfung unterzogen wird,

(c) die bei (b)auftretende Mutterlauge durch Nanofiltration in Retentat und Permeat aufgetrennt wird, wobei

(d) das Retentat als Fällungsagens bei (a) eingesetzt wird, Bestandteil der vorliegenden Erfindung. Das/die Alkalihalogenid(e) werden der/den Verdampfungsanlage(n) entnommen. Insbesondere handelt es sich bei dem/den Alkalihalogenid(en), die erfindungsgemäß erhalten werden, um - Natrium und/oder Kaliumchlorid.

Die vorliegende Erfindung wird durch die nachfolgenden Figuren näher erläutert:

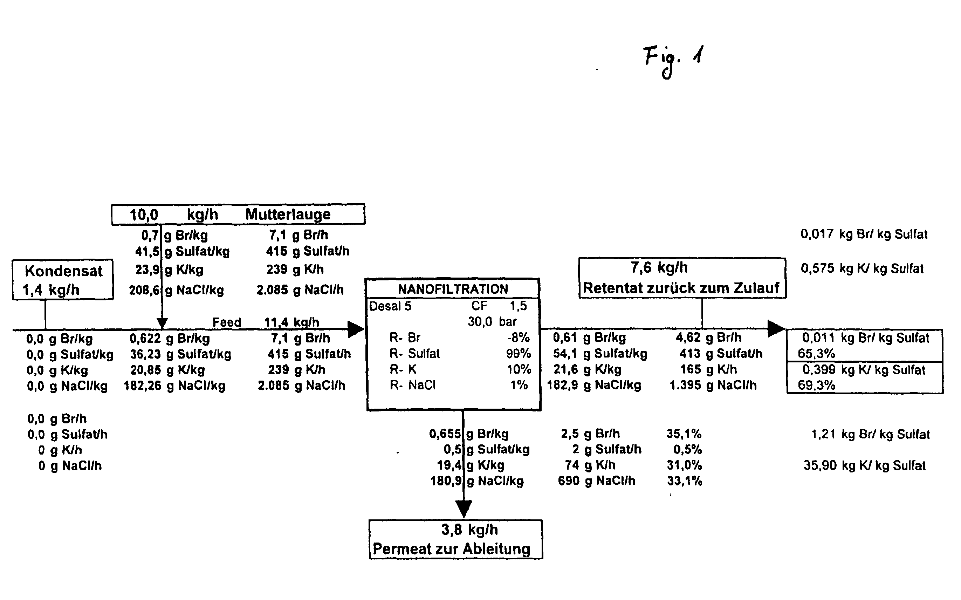

Figur 1 stellt schematisch die Stoffflüsse bei einer Prozeßführung mit Verdünnung der Mutterlauge durch Kondensat und 90%iger Sulfatrückführung dar. Hervorgehoben sind die Einflüsse von Mutterlauge bzw. Kondensat zur Nanofiltration und die Ausflüsse von Retentat bzw. Permeat nach dem Nanofiltrationsschritt mit ihren jeweiligen Ionenkonzentrationen. Figur 1 faßt das Ergebnis des 1. Ausführungsbeispiels zusammen.

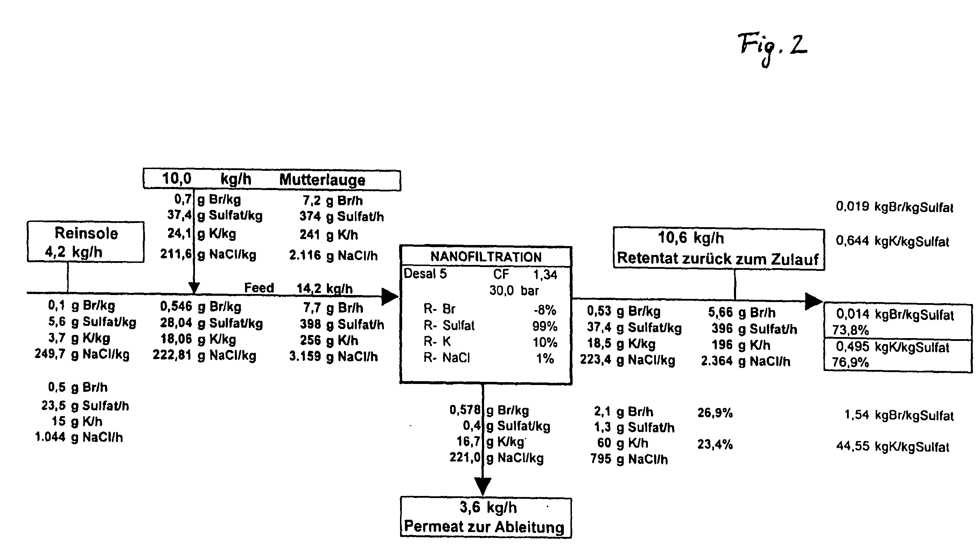

Figur 2 stellt schematisch die Stoffflüsse bei einer Prozeßführung mit Verdünnung der Mutterlauge durch Reinsole und 80%iger Sulfatrückführung dar. Hervorgehoben sind die Einflüsse von Mutterlauge bzw. Reinsole zur Nanofiltration und die Ausflüsse von Retentat bzw. Permeat nach dem Nanofiltrationsschritt mit ihren jeweiligen Ionenkonzentrationen. Figur 2 faßt das Ergebnis des 2. Ausführungsbeispiels zusammen.

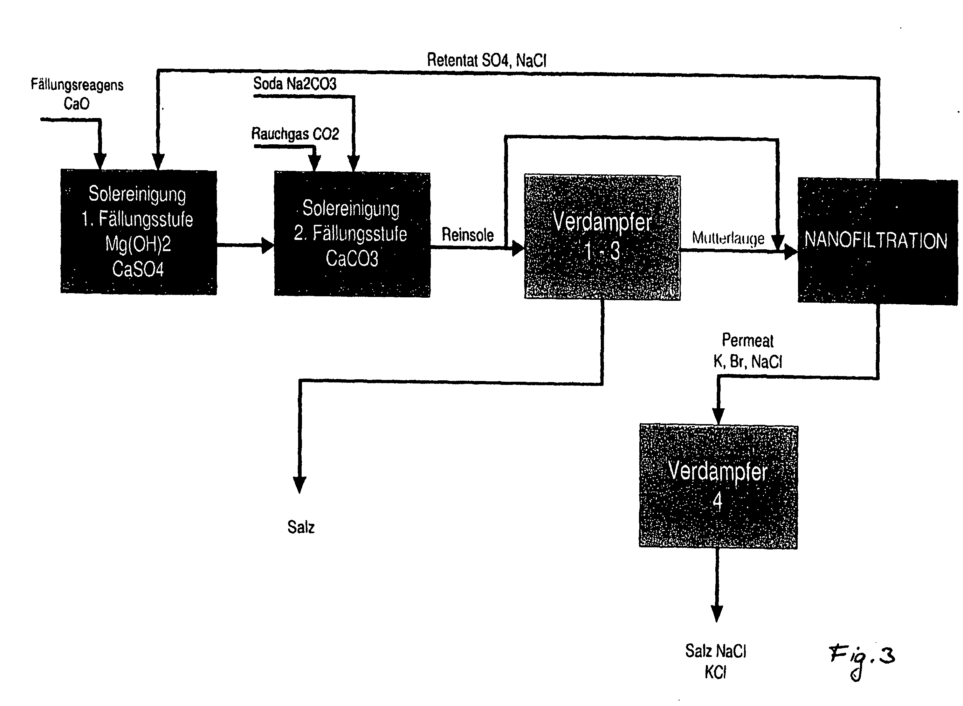

Figur 3 stellt in Form eines Fließschemas in beispielhafter Form die Durchführung des erfindungsgemäßen Verfahrens dar. Die Rohsole wird dabei zunächst in einem 1. Fällungsschritt aufbereitet, in dem deren Magnesium als $Mg(OH)_2$ und Ca als $CaSO_4$ niedergeschlagen werden. Als Fällungsagenzien dienen gebrannter Kalk (CaO), der in wäßriger Lösung als Kalkmilch das schwerlösliche Magnesiumhydroxid fällt, und Sulfat, das im Retentatstrom (nach Passage der Nanofiltrationsmembran) enthalten ist.

Die derart aufbereitete Rohsole wird in einem nachgeschalteten zweiten Fällungsschritt von verbliebenem Ca durch Einleitung von Rauchgas/$CO_2$ und/oder Zugabe von $Na_2CO_3$ befreit. Diese fällt als $CaCO_3$ aus. Nach Passage der beiden Fällungsstufen wird das Substrat als Reinsole bezeichnet. Die Reinsole kann nunmehr entweder in einem oder in mehrere Verdampfer, typischerweise 1 bis 6, insbesondere 1 bis 3, Verdampfer eingeleitet werden, oder aber zur Verdünnung der Mutterlauge eingesetzt werden. Bei den Verdampfern kann es sich um alle Modelle, die dem Fachmann auf dem Gebiet der Soleaufbereitung geläufig sind, handeln. Dem (den) Verdampfer(n) kann kristallisiertes Alkalihalogenid, insbesondere NaCl, entnommen werden. Als ökologisch bedenkliches Nebenprodukt des Verdampfungsprozesses tritt die sogenannte Mutterlauge auf, die im typischen Fall der NaCl-Gewinnung nicht auskristallisiertes Natrium und Chlorid sowie Sulfat, Kalium und Bromid enthält. Erfindungsgemäß wird diese Mutterlauge mit Reinsole oder Kondensat (nicht dargestellt) in hinsichtlich der Prozeßführung optimierten Mengen versetzt. Diese noch an der Sättigungsgrenze für anorganische Salze liegende Mischung wird an einer Nanofiltrationsmembran so aufgetrennt, daß ein Retentatstrom, in dem nahezu vollständig die Sulfatbestandteile verblieben sind, und ein Permeatstrom entstehen. Während der Retentatstrom, wie oben beschrieben, als Fällungsagens in den Kreislauf zurückgeführt wird, wird der Permeatstrom einem oder auch mehreren Verdampfern zugeleitet, um dort noch verbliebene Alkalihalogenide auskristallisieren zu lassen. Durch die erfindungsgemäße Verfahrensführung wird erreicht, daß die nach dem Stand der Technik stets anfallende und ökologisch problematische Mutterlauge weitestgehend in der Kreislaufführung einer Weiterverwertung zugeführt wird.

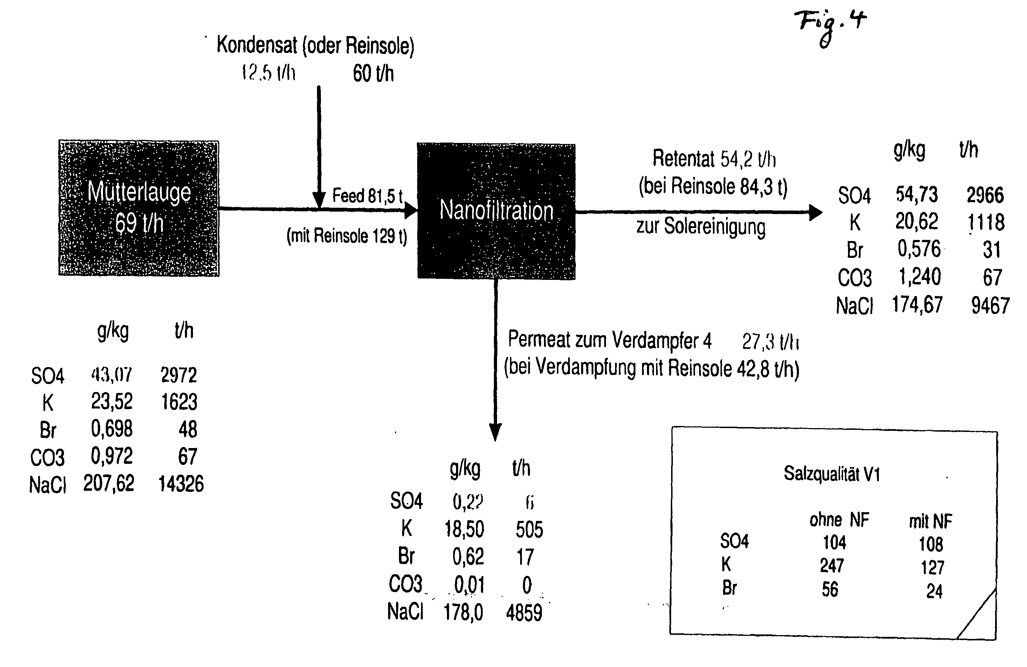

Figur 4 stellt beispielhaft die Ein- bzw. Ausflüsse bei der Durchführung des erfindungsgemäßen Verfahrens im großtechnischen Einsatz dar.

Hierzu wurden 69 t/h Mutterlauge mit 12,5 t/h Kondensat (60 t/h Reinsole) vermischt, und diese Mischung der Nanofiltration zugeführt. Der Retentatstrom, der zur Soleaufbereitung eingesetzt wird, wies einen Ausfluß von 54,2 t/h (84,3 t/h), der Permeatstrom, der aus dem Kreislauf ausgeführt wird, einen Ausfluß von 27,3 t/h (42,8 t/h) auf. In Figur 4 finden sich weiterhin die Konzentrationen von $SO_4$, K, Br, $CO_3$ und NaCl in der Mutterlauge, im Permeat und im Retentat, jeweils in g/kg, und die jeweiligen Aus- und Einflußgrößen in t/h.

Die eingefügte Tabelle in Figur 4 gibt die Salzqualität, die sich im Verdampfer V1 im Hauptkreislauf einstellt, vergleichsweise bei Verfahrensführung mit bzw. ohne Nanofiltrationsschritt wieder (Ionenkonzentration in mg/kg). Hierbei zeigt sich, daß der Nanofiltrationsschritt zu einer ca. 50%igen Reduktion von K bzw. Br im Salz aus V1 führt.

Die vorliegende Erfindung wird durch die nachfolgenden Ausführungsbeispiele näher erläutert:

**1. Ausführungsbeispiel**

Das erste Ausführungsbeispiel des erfindungsgemäßen Verfahrens stellt eine Prozeßführung mit Verdünnung der Mutterlauge durch Kondensat und 90%iger Sulfatrückführung dar.

10 kg/h Mutterlauge, erhalten aus Verfahrensschritt (b) nach Passage des letzten Verdampfers, wurden mit 1,4 kg/h Kondensat vermischt. Die Mutterlauge enthielt 0,7g Br/kg, 41,5g Sulfat/kg, 23,9g K/kg und 208,6g NaCl/kg, während das Kondensat keine Anteile an den vorgenannten Ionen/Salzen aufwies. Damit reduzierten sich die entsprechenden Konzentrationen in der Mischung aus Kondensat und Mutterlauge auf 0,622g Br/kg, 36,23g Sulfat/kg, 20,85g K/kg und 182,26g Nacl/kg. Diese Mischung von 11,4 kg/h wurde dann einer kontinuierlichen Nanofiltration bei einem Betriebsdruck von 30 bar unterzogen. Hierbei wurde eine Nanofiltrationsmembran mit der Bezeichnung NF5k (DESAL-5) eingesetzt.

Der kontinuierliche Nanofiltrationsprozeß führte zu einer Trennung der Mischung von 11,4 kg/h in einen Retentatstrom von 7,6 kg/h und in einen Permeatstrom von 3,8 kg/h.

Das Permeat wies die folgenden Konzentrationen auf: 0,655g Br/kg, 0,5g Sulfat/kg, 19,4g K/kg und 180,9g NaCl/kg. Das Retentat enthielt 0,61g Br/kg, 54,1g Sulfat/kg, 21,6g K/kg und 182,9g NaCl/kg. Das Permeat wurde nunmehr der weiteren Aufbereitung zugeführt und aus dem Salzgewinnungsprozeß ausgeschleust. Das Retentat wurde dagegen in die Rohsolereinigung gemäß Verfahrensschritt (d) als Fällungsagens zurückgeführt (Figur 1).

Im Ergebnis ist festzuhalten, daß (i) der Sulfatanteil der Mutterlauge nach dem Trennschritt (c) nahezu vollständig (R ≈ 99%) im Retentat zurückgehalten wurde und (ii) das Retentat einen - bezogen auf die in demselben vorhandene Sulfatkonzentration - um ca. 35 % verringerten Bromid- und einen um ca. 31 % verringerten Kaliumanteil aufwies. In absoluten Zahlen bedeutet dies, daß sich der spezifische Bromidgehalt in der Mutterlauge von 17g Br/kg Sulfat auf 11g Br/kg Sulfat im Retentat reduzierte. Hinsichtlich des spezifischen Kaliumgehaltes ergaben sich in der Mutterlauge ein spezifischer Gehalt von 57,5g K/kg Sulfat und im Retentat ein Wert von 397g K/kg Sulfat.

Damit zeigt das vorliegende Ausführungsbeispiel, daß das erfindungsgemäße Verfahren durch die Kreislaufführung nahezu den gesamten Sulfatgehalt der Mutterlauge als Fällungsagens für die Solereinigung zur Verfügung stellt. Bereits eine Rückführung von 90 % des in der Mutterlauge gelösten Sulfats führt dazu, daß 65 % der andernfalls erforderlichen Sodamenge eingespart werden können. Durch die Kreislaufführung sinken ferner der Kaliumgehalt in der Reinsole um ca. 48 % bzw. der Bromidgehalt um ca. 56 %.

**2. Ausführungsbeispiel**

Das 2. Ausführungsbeispiel stellt das erfindungsgemäße Verfahren für eine Prozeßführung mit Reinsoleverdünnung der Mutterlauge und 80%iger Sulfatrückführung dar.

10 kg/h Mutterlauge, erhalten aus Verfahrensschritt (b) nach Passage des letzten Verdampfers, wurden mit 4,2 kg/h Reinsole (0,1g Br/kg, 5,6g Sulfat/kg, 3,7g K/kg, 249,7g NaCl/kg) vermischt. Die Mutterlauge enthielt 0,7g Br/kg, 37,4g Sulfat/kg, 24,1g K/kg, 211,6g NaCl/kg. Damit wies die Mischung aus Mutterlauge und Reinsole von 14,2 kg/h 0,546g Br/kg, 28,04g Sulfat/kg, 18,06g K/kg und 222,81g NaCl/kg auf. Diese Mischung wurde dann einer kontinuierlichen Nanofiltration bei einem Betriebsdruck von 30 bar unterzogen. Hierbei wurde eine Nanofiltrationsmembran mit der Bezeichnung NF5k (DESAL-5) eingesetzt.

Der kontinuierliche Nanofiltrationsprozeß führte zu einer Trennung der Mischung von 14,2 kg/h in einen Retentatstrom von 10,6 kg/h und in einen Permeatstrom von 3,6 kg/h.

Das Permeat wies die folgenden Konzentrationen auf: 0,578g Br/kg, 0,4g Sulfat/kg, 16,7g K/kg und 221 g NaCl/kg. Das Permeat wurde nunmehr aus dem Salzgewinnungsprozeß ausgeschleust und der weiteren Aufbereitung zugeführt. Das Retentat enthielt 0,53g Br/kg, 37,4g Sulfat/kg, 18,5g K/kg und 223,4g NaCl/kg. Das Retentat wurde nunmehr als Fällungsagens zur Rohsole gemäß Verfahrensschritt (d) zurückgeführt und der Verfahrenskreislauf insoweit geschlossen (Figur 2).

Im Ergebnis ist festzuhalten, daß (i) der Sulfatanteil der Mutterlauge nach dem Trennschritt (c) nahezu vollständig (R ≈ 99%) im Retentat zurückgehalten wurde und (ii) das Retentat einen - bezogen auf die in demselben enthaltene Sulfatkonzentration - um ca. 26% verringerten Bromid- und einen um ca. 23% verringerten Kaliumanteil aufwies. In absoluten Zahlen bedeutet ..dies, daß sich der in der Mutterlauge vorhandene spezifische Bromidgehalt von 19g Br/kg Sulfat auf 14g Br/kg Sulfat im Retentat, also nach Passage der Nanofiltrationsmembran, reduziert hat. Die entsprechenden Werte für den spezifischen Kaliumgehalt lauten: 644g K/kg Sulfat in der Mutterlauge und 495g K/kg Sulfat im Retentat.

Damit zeigt das vorliegende Ausführungsbeispiel, daß durch das erfindungsgemäße Verfahren nahezu vollständig das Sulfat aus der Mutterlauge abgetrennt und als Fällungsagens in den Aufbereitungsprozeß zurückgeführt werden kann. Durch die Rückführung von 80% des in der Mutterlauge gelösten Sulfats kann im Solereinigungsprozeß mindestens 50% der andernfalls als Fällungsagens erforderlichen Sodamenge eingespart werden. Durch die Kreislaufführung sinkt der Kaliumgehalt in der Reinsole um mindestens 50% und der Bromidgehalt um mindestens 55%. Dadurch kann eine wesentliche Verbesserung der Salzqualität erreicht werden.

Weiterhin ist ein Annex der Anmeldung angefügt, der detailliert die Verfahrenssteuerung anhand eines Ausführungsbeispiels für die vorliegende Erfindung beschreibt. Der Annex gehört zur Offenbarung der erfindungsgemäßen Lehre.

**Annex**

**1. Allgemeines**

Das hier beschriebene Verfahren wird über ein Programm gesteuert, das aus den folgenden 13 Tabellen (Microsoft Excel) besteht:

**1) Molmassenberechnung**

Die Molmassen sämtlicher in diesem Prozeß relevanter Elemente wurden eingegeben. Daraus werden die Molmassen aller in Prozeß vorkommenden Verbindungen berechnet.

2) Rohsoleanalytik

Die in den Prozeß einlaufende Rohsole ist zu analysieren und die gefundene Zusammenseztung in das Programm einzugeben.

3) Eingabe

Alle anderen benötigten Eingabeparameter sind in diese Tabelle einzutragen.

4) Ausgabe

Dieses Übersichtsblatt stellt alle wichtigen Ausgabeparameter dar.

5) 1. Fällungsstufe

Die Berechnungen der 1. Fällungsstufe werden durchgeführt. Wie in allen folgenden Tabellen sind einlaufende Ströme links plaziert, die Berechnungen in der Mitte und die Stufe verlassende Ströme rechts.

6) 2. Fällungsstufe

Berechnungen der 2. Fällungsstufe

7) Verdampfer V0

Berechnungen, die den Verdampfer V0 betreffen.

8) Verdampfer V1

Berechnungen, die den Verdampfer V1 betreffen.

9) Verdampfer V2

Berechnungen, die den Verdampfer V2 betreffen.

10) Verdampfer V3

Berechnungen, die den Verdampfer V3 betreffen.

11) Verdampfer-Gesamtstatistik

Wichtige Parameter der einzelnen Verdampfer addiert. Außerdem die Berechnung der gesammelten Filtratsole.

12) Nanofiltration

Berechnung der Membrantrennstufe.

13) Verfahrensschema

Hier werden die Stoffkreisläufe graphisch dargestellt. Die wichtigen Ergebnisse der vorangehenden Berechnungen sind. ebenfalls enthalten.
Nun folgt die Beschreibung der Berechnungsweise der einzelnen Verfahrensstufen.

**2. Fällung**

**2.1. Erste Fällungsstufe**

Verwendete Eingabeparameter:

- Dichte der Rohsole und Gehalte der Rohsole an Ca, Mg, K, $HCO_3$, $SO_4$, Cl, Br, $H_2O$ und NaCl (Werte aus der Rohsoledurchschnittsanalyse des Jahres 1996 übernommen);
- Menge der Rohsole (Wert aus dem Blockschema der Salinen Austria übernommen);
- Molmassen der Elemente H, C, O, Na, Mg, S, Cl, K, Ca, Br und der Verbindungen $CaCO_3$, CaO, $CaSO_4$, $CaSO_4*2H_2O$, $CO_2$, $CO_3^{2-}$, $H_2O$, $HCO_3^-$, KBr, KCl, $Mg(OH)_2$, $Na_2CO_3$, $Na_2SO_4$, NaCl, NaOH, $OH^-$, $SO_4^{2-}$ (vom Programm berechnet).
- Zur Berechnung der Parameter für diese Stufe benötigt das Programm Daten über das zurückgeführte Retentat.

Die in der Rohsoleanalytik berechneten Gehalte der Ionen in der Rohsole (g/l) wurden auf Massenströme (kg/h) dieser Ionen bzw. Verbindungen umgerechnet:

$$\text{Massenstrom (kg/h)} = \frac{\text{Konzentration (g/l) * Masse Rohsole (t/h)}}{\text{Dichte (kg/l)}} \qquad (1)$$

Die Dichte im Fällungsbehälter wurde mit 1,210 kg/l fixiert (entspricht der mit den Mengen gewichteten Dichte von Rohsole und zurückgeführter Mutterlauge bzw. Retentat).

Das Programm berechnet nun den Massenstrom, der pro Stunde in den Fällungsbehälter eintritt:

$$\text{Massenstrom (t/h)} = \text{Rohsole(t/h)} + \text{zur.Mutterlauge (t/h)} + \frac{\text{zugegebenes CaO (kg/h)}}{1000} \qquad (2)$$

Die Berechnung des Fällungsprozesses beruht auf einem Stufenmodell: angenommen wurde, daß in der 1.Fällungsstufe folgende Reaktionen nacheinander ablaufen:

$$1) \qquad CaO + H_2O \rightarrow Ca^{2+} + 2\,OH^-$$

Das Calciumoxid löst sich vollständig auf und bildet Calciumhydroxid, welches im vorliegenden Konzentrationsbereich vollständig dissoziiert.

$$2) \qquad HCO_3^- + OH^- \rightarrow CO_3^{2-} + H_2O$$

Das mit der Rohsole ausgelaugte natürliche Hydrogencarbonat wird durch die hohe $OH^-$-Konzentration vollständig deprotoniert und in Carbonat überführt.

$$3) \qquad Mg^{2+} + 2\,OH^- \rightarrow Mg(OH)_2\downarrow$$

Magnesium, das sich im Fällungsbehälter befindet, wird mit $OH^-$-Überschuß vollständig ausgefällt.

$$4) \qquad CO_3^{2-} + Ca^{2+} \rightarrow CaCO_3\downarrow$$

Durch den hohen $Ca^{2+}$-Überschuß im Fällungsbehälter fällt das schwerlösliche Calciumcarbonat vollständig aus.

$$5) \qquad Ca^{2+} + SO_4^{2-} + 2\,H_2O \rightarrow CaSO_4*2H_2O\downarrow$$

$Ca^{2+}$ und $SO_4^{2-}$ liegen in hohen Konzentrationen vor, was das Ausfallen von Gips zur Folge hat. Dieser Gips löst sich jedoch in der Rohsole zu einem gewissen Teil, der über das Löslichkeitsprodukt (1800 mmol$^2$/l$^2$) berechnet werden kann.

In diesem Stufenmodell wurde der Einfachheit halber angenommen, daß sich die einzelnen Raktionen sich nicht gegenseitig beeinflussen, und daß sie nicht gleichzeitig, sondern nacheinander ablaufen. Berücksichtigt wurde aber, daß sich die Ionengehalte der Rohsole nach den einzelnen Reaktionen ändern.

Ionenkonzentrationen nach der CaO-Zugabe (berücksichtigt die Reaktionen 1 und 2) :

Magnesium stammt nur aus der Rohsole, nicht aus der zurückgeführten Mutterlauge und nicht aus den Fällungsreagenzien. Der Massenstrom an Mg wurde deshalb von der Rohsoleanalytik übernommen.

Calcium stammt aus der Rohsole (RS), aus den Fällungsreagenzien und - zu einem sehr geringen Teil - aus der zurückgeführten Mutterlauge (ML) (MM=Molmasse):

$$\text{Ca (kg/h)} = \text{Ca aus RS (kg/h)} + \text{Ca aus ML (kg/h)} + \text{CaO ges. (kg/h)} * \frac{\text{MM von Ca(g/mol)}}{\text{MM von CaO (g/mol)}} \qquad (3)$$

Sulfat stammt aus Rohsole und Mutterlauge - einfache Summe der Massenströme.

Hydroxylionen werden einerseits durch Reaktion 1 (Zugabe von CaO) gebildet, andererseits durch Reaktion 2 (Deprotonierung von $HCO_3^-$) verbraucht. Außerdem läuft ein geringer Teil der Hydroxylionen mit der Mutterlauge zurück.

Deshalb wird der Massenstrom von $OH^-$ mit folgender Formel berechnet (MM = Molmasse):

$$\text{OH (kg/h)} = \text{OH aus ML (kg/h)} + \text{CaO ges.} * 2 * \frac{\text{MM OH}}{\text{MM CaO}} - \text{HCO3 aus RS} * \frac{\text{MM OH}}{\text{MM HCO3}} \qquad (4)$$

Carbonat stammt aus der zurückgeführten Mutterlauge bzw. wird durch die Reaktion 2 aus Hydrogencarbonat gebildet:

$$\text{CO3(kg/h)} = \text{CO3 aus ML (kg/h)} + \text{HCO3 aus RS(kg/h)} * \frac{\text{MM von CO3}}{\text{MM von HCO3}} \qquad (5)$$

Wasser wird mit Rohsole und Mutterlauge hereintransportiert, durch Reaktion 1 verbraucht und durch Reaktion 2 gebildet:

$$\text{H2O(kg/h)} = \text{H2O v. RS} + \text{H2O v. ML} - \text{CaO ges.} * \frac{\text{MMH2O}}{\text{MMCaO}} + \text{HCO3 v.RS} * \frac{\text{MMH2O}}{\text{MMHCO3}} \qquad (6)$$

Ionenkonzentrationen nach der Mg(OH)2- und CaCO3-Fällung (berücksichtigt zusätzlich die Reaktionen 3 und 4) :

Vollständige Fällung von Magnesium als $Mg(OH)_2$ wird angenommen. Die Reinsoleanalysen des Jahres 1996 zeigen, daß dies praktisch der Fall ist. Der Gehalt an Mg nach dieser Fällungsstufe wurde daher mit 0,0 g/l festgelegt. Analog dazu wird die vollständige Ausfällung von Carbonat angenommen. Dies ist plausibel, da $Ca^{2+}$ in großem Überschuß vorhanden ist. Der Gehalt an $CO_3^{2-}$ nach dieser Fällungsstufe wurde daher mit 0,0 g/l festgelegt.

Durch die Reaktion 3 werden stoffmengenmäßig genau doppelt soviele Hydroxylionen verbraucht, wie $Mg^{2+}$-Ionen ausfallen. Der Massenstrom an $OH^-$ wird daher nach folgender Formel berechnet (zuvor = nach Reaktion 1 und 2; danach = nach Reaktion 3 und 4) :

$$\text{OH (kg/h)} = \text{OH zuvor} - (\text{Mg zuvor} - \text{Mg danach}) * 2 * \frac{\text{MM von OH}}{\text{MM von Mg}} \qquad (7)$$

Als Produkt der Fällungsreaktion 3 fällt $Mg(OH)_2$ aus, das im Schlamm dieser Fällungsstufe zu finden ist.

$$\text{Mg(OH)2 (kg/h)} = (\text{Mg zuvor} - \text{Mg danach}) * \frac{\text{MM von Mg(OH)2}}{\text{MM von Mg}} \qquad (8)$$

Calcium-Ionen werden durch die Fällung als Calciumcarbonat aus der Lösung entfernt:

$$Ca \ (kg/h) = Ca \ zuvor - (CO3 \ zuvor - CO3 \ danach) * \frac{MM \ von \ Ca}{MM \ con \ CO3} \tag{9}$$

Als Schlamm dieser Fällungsreaktion fällt Calciumcarbonat an:

$$CaCO3(kg/h) = (CO3 \ zuvor - CO3 \ danach) * \frac{MM \ von \ CaCO3}{MM \ con \ CO3} \tag{10}$$

Ionenkonzentrationen nach der CaSO4*2H2O-Fällung (berücksichtigt auch die Reaktion 5):

Nach den Reaktionen 1-4 werden die Massenströme an $Ca^{2+}$ und $SO_4^{2-}$ in Stoffmengenkonzentrationen (mmol/l) umgerechnet:

$$Konz. \ (mmol/l) = Massenstrom \ (kg/h) * \frac{1000 * Dichte \ (kg/l)}{Ges.masse \ im \ Fällbehälter \ (t/h) * Molmasse \ (g/mol)} \tag{11}$$

Die nach der Gipsfällung erwünschte Ca-Konzentration ist als Verfahrensparameter anzugeben. Mit diesem etwas unhandlichen, für die weiteren Berechnungen aber sehr sinnvollen Parameter beeinflußt man indirekt die mit der Mutterlauge zurückzuführende Sulfatmenge und den Natriumcarbonat-Verbrauch der zweiten Fällungsstufe. Eine höhere erwünschte Ca-Konzentration nach Gipsfällung bewirkt höheren Natriumcarbonat-Verbrauch, dafür muß nicht soviel Sulfat in die erste Fällungsstufe zurückgeführt werden. Dies bewirkt weiters, daß weniger Mutterlauge zurückgeführt werden muß. Die an Verunreinigungen reiche Mutterlauge bewirkt eine deutliche Verschlechterung der Salzqualität.
Über das Löslichkeitsprodukt von Gips ($1800 \ mmol^2/l^2$) wird die dazugehörige Konzentration an Sulfat nach der Gipsfällung errechnet. Die Konzentrationen werden in Massenströme umgerechnet.

$$Massenstrom \ (kg/h) = Konz.(mmol/l) * \frac{Ges.masse \ im \ Fällbehälter \ (t/h) * MM \ (g/mol)}{1000 * Dichte \ (kg/l)} \tag{12}$$

Da vom Programm zuvor die Ca-Konzentration vor der Gipsfällung errechnet wurde, entspricht die Differenz der abgeschiedenen Menge Gips in mmol/l. Auch von der Sulfatkonzentration vor der Gipsfällung wird der entsprechende Wert abgezogen. Das mit dem Gips ausfallende Kristallwasser wird ebenfalls in der Rechnung berücksichtigt. Der gesamte Schlamm der 1.Fällungsstufe setzt sich aus $Mg(OH)_2$, $CaCO_3$ und $CaSO_4*2H_2O$ zusammen und wird durch Addition seiner Bestandteile ermittelt.

Der Massenstrom der Halbreinsole (HRS; ist das Produkt der 1.Fällungsstufe) wird aus einer einfachen Stoffbilanz berechnet:

$$HRS \ (t/h) = Rohsole \ (t/h) + zur.ML \ (t/h) + \frac{zugeg.CaO \ (kg/h)}{1000} - \frac{Schlamm \ 1.Fäll.stufe \ (kg/h)}{1000} \tag{13}$$

Berechnung der zugegebenen Menge an CaO:

1) CaO für Mg-Fällung:

$$Massenstrom \ an \ CaO \ (kg/h) = Massenstrom \ an \ Mg \ (kg/h) * \frac{Molmasse \ von \ CaO \ (g/mol)}{Molmasse \ von \ Mg \ (g/mol)} \tag{14}$$

2) 1 CaO für pH-Wert:

Erwünscht sind 25 mmol $OH^-$ pro Liter Halbreinsole (HRS). Die Dichte der Halbreinsole wurde mit 1,204 kg/l angenommen (Verfahrensparameter). Dies entspricht dem Mittelwert aus der Dichte der Rohsole (1,203 kg/l) und der Dichte der Reinsole (1,205 kg/l).

$$CaO \ (kg/h) = \frac{HRS(t/h)*1000}{Dichte \ HRS \ (kg/l)} * \frac{OH \ (erwünscht) \ (mmol/l)}{2*1000} * \frac{Molmasse \ von \ CaO \ (g/mol)}{1000} \tag{15}$$

3) CaO für pH aus der Mutterlauge

Da eine gewisse Menge OH⁻ mit der zurückgeführten Mutterlauge den Fällungsbehälter erreicht, muß weniger CaO zugegeben werden, um den erwünschten pH-Wert im Fällungsbehälter zu erreichen.

$$CaO \ (kg/h) = \frac{OH \ in \ zur.ML \ (kg/h)*Molmasse \ von \ CaO \ (g/mol)}{2*Molmasse \ von \ OH} \tag{16}$$

Die Gesamtmenge an zugegebenem CaO berechnet sich aus:

$$Gesamt - CaO = (CaO \ f. \ Mg - Fäll. + CaO \ f. \ pH - CaO \ f. \ pH \ aus \ ML) * \frac{100}{Ausnutzung \ (\%)} \tag{17}$$

Die Ausnutzung wurde vorläufig mit 100 % angenommen (Verfahrensparameter).
Gründe für die Einführung dieses Parameters: CaO ist nicht ganz rein bzw. ein Teil von $Ca(OH)_2$ bleibt undissoziiert und liegt als Suspension vor.
Von 100% verschiedene Werte müßten vom Programm gesondert behandelt werden (siehe Verbesserungsvorschläge). Die tatsächliche OH⁻-Konzentration in der Halbreinsole wird nach Gleichung (11) aus dem Massenstrom an OH⁻ berechnet. Die Differenz zum erwünschten Wert liegt in der Deprotonierung des Hydrogencarbonats begründet.
Ein gewisser Teil der Halbreinsole haftet dem Schlamm der 1. Fällungsstufe an und wird mit diesem abgezogen. Diese Menge ist als Verfahrensparameter einstellbar (derzeit auf 2,5 t/h gestellt). Der Rest der Halbreinsole läuft weiter und erreicht die 2. Fällungsstufe.
Die Massenströme der gelösten Ionen werden demgemäß mit dem Faktor (HRS danach / HRS zuvor) multipliziert.

## 2.2. Zweite Fällungsstufe

Ziel der 2. Fällungsstufe ist die Entfernung von Rest-Ca aus der Halbreinsole. Das Ca wird dazu mit $CO_2$ und $Na_2CO_3$ als $CaCO_3$ gefällt.
In der 2. Fällungsstufe ablaufende Reaktionen (wieder wurde ein Stufenmodell angenommen):

$$1) \qquad Ca^{2+} + 2 \ OH^- + CO_2 \rightarrow CaCO_3\downarrow + H_2O$$

Aus der stark alkalischen Halbreinsole wird Ca durch Einleiten von $CO_2$ gefällt. Die Produktion von $CO_2$ verursacht keine Kosten, da es aus anfallendem Rauchgas stammt.

$$2) \qquad Na_2CO_3 \rightarrow 2 \ Na^+ + CO_3^{2-}$$

Die Dissoziation von zugegebenem Natriumcarbonat erfolgt vollständig. Der Eintrag von Na-Ionen in die Sole stört nicht; Natriumcarbonat ist aber relativ teuer.

$$3) \qquad Ca^{2+} + CO_3^{2-} \rightarrow CaCO_3\downarrow$$

Das restliche Ca wird durch Überschuß an Carbonat-Ionen gefällt. Daher ist die in Lösung verbleibende Ca-Konzentration ist sehr gering. Jedoch verbleiben überschüssige Carbonat-Ionen in der Sole.

Berechnung der Ionenkonzentrationen nach der Fällung mit CO2 (berücksichtigt Reaktion 1):

Die Dichte der den 2. Fällungsbehälter verlassenden Reinsole beträgt 1,205 kg/l (Verfahrensparameter; beruht auf der Reinsole-Durchschnittsanalyse des Jahres 1996).
Die Menge an Reinsole (RS) wird nach einer Stoffbilanz folgendermaßen berechnet:

$$RS \ (t/h) = Halbreinsole \ (t/h) + \frac{zugeg.Fäll.reagenzien(kg/h)}{1000} - \frac{abgeführter \ Schlamm \ (kg/h)}{1000} \tag{18}$$

Die OH⁻-Konzentration in der Reinsole beträgt 0,059 g/l (Verfahrensparameter; beruhend auf der Reinsole-Durchschnittsanalyse des Jahres 1996). Daraus kann der Massenstrom von OH⁻ analog zur Gleichung (1) berechnet werden. Dieser Wert entspricht dem Wert nach der Fällung mit $CO_2$.

Aus der Differenz $\Delta m(OH) :=$ OH in Halbreinsole - OH nach Fällung mit CO2 kann man den Masssenstrom von Ca nach diesem Fällungsprozeß berechnen:

$$Ca\ (kg/h) = Ca\ in\ Halbreinsole\ (kg/h) - \frac{\Delta m(OH)(kg/h)}{2} * \frac{Molmasse\ von\ Ca\ (g/mol)}{Molmasse\ von\ OH\ (g/mol)} \qquad (19)$$

Der Massenstrom von Wasser wird analog berechnet:

$$H2O\ (kg/h) = H2O\ in\ Halbreinsole\ (kg/h) + \Delta m(OH)\ (kg/h) * \frac{Molmasse\ von\ H2O\ (g/mol)}{Molmasse\ von\ OH\ (g/mol)} \qquad (20)$$

Die pro Stunde zuzugebende Masse an $CO_2$ berechnet man nach einer ähnlichen Formel:

$$CO2(kg/h) = \Delta m(OH)\ (kg/h) * \frac{Molmasse\ von\ CO2\ (g/mol)}{Molmasse\ von\ OH\ (g/mol)} \qquad (21)$$

Die Umrechnung der Masse an $CO_2$ in das Normvolumen an Rauchgas erfolgt mit der Annahme von 10 Vol% $CO_2$ im Rauchgas (praktisch vollständige Umsetzung des in der Luft enthaltenen Sauerstoffes) und mit Hilfe der idealen Gasgleichung:

$$V = \frac{mRT}{Mp} * \frac{100}{10} \qquad (22)$$

R = 8,31441 J/molK
p = 101325 Pa
T = 273,15 K

Berechnung der Ionenkonzentrationen nach der Fällung mit $Na_2CO_3$ (berücksichtigt zusätzlich die Reaktionen 2 und 3) :

In der Reinsole befinden sich 0,007 g/l Ca (Verfahrensparameter; beruhend auf der Reinsole-Durchschnittsanalyse des Jahres 1996). Diese Konzentration wird analog zur Gleichung (1) in einen Massenstrom umgerechnet. Dieser Wert entspricht dem Wert nach der Fällung mit $Na_2CO_3$. Aus der Differenz $\Delta m(Ca) :=$ Ca nach Fällung mit $CO_2$ - Ca nach Fällung mit $Na_2CO_3$ kann die übrigen Massenströme dieses Fällungsprozesses berechnen.

$$zugeg.\ Na2CO3\ (kg/h) = \left( \frac{\Delta m(Ca)\ (kg/h)}{MM\ von\ Ca\ (g/mol)} + \frac{Reinsole\ (t/h) * 1000}{Dichte\ der\ Reinsole\ (kg/l)} * \frac{3}{1000} \right) * \frac{MM\ von\ Na2CO3}{1000} \qquad (23)$$

Der Sodaüberschuß, ein Verfahrensparameter, wurde mit 3 mmol/l angegeben. Der zweite Term in der Klammer der obigen Gleichung bezieht sich auf diesen Sodaüberschuß.

$$verbleibendes\ CO_3^{2-} = \left( \frac{Reinsole\ (t/h) * 1000}{Dichte\ der\ Reinsole\ (kg/l)} * \frac{3}{1000} \right) * \frac{MM\ von\ CO_3^{2-}\ (g/mol)}{1000} \qquad (24)$$

Schlamm der beiden Fällungsprozesse der 2. Fällungsstufe:

$$CaCO3\ (kg/h) = \left( \frac{\Delta m(OH)\ (kg/h)}{2} * \frac{MM\ v.\ CaCO3\ (g/mol)}{MM\ v.\ OH\ (g/mol)} \right) + \left( \Delta m(Ca)\ (kg/h) * \frac{MM\ v.\ CaCO3\ (g/mol)}{MM\ v.\ Ca\ (g/mol)} \right) \qquad (25)$$

Ein gewisser Teil der Reinsole haftet dem Schlamm der 2. Fällungsstufe an und wird mit diesem abgezogen. Diese Menge ist als Verfahrensparameter einstellbar (derzeit auf 2,5 t/h gestellt). Der Rest der Reinsole läuft weiter und erreicht die Verdampfer.

Die Massenströme der gelösten Ionen werden demgemäß mit dem Faktor (RS danach / RS zuvor) multipliziert.

Eine detaillierte Aufstellung der Massenströme aller relevanten Ionen und ihrer Konzentrationen in g/l und in g/kg findet sich in der die Fällungsstufen abschließenden Tabelle.

### 3. Verdampfer

Die Berechung der Verdampfer geht von der Verampfer-Gesamtstatistik aus.

In der Mutterlauge nach dem Verdampfer 4 (ML V4) soll die Sulfat-Konzentration 31,75 g/l betragen (Verfahrensparameter). Der für die Verdampfer sehr wesentliche Aufkonzentrierungsfaktor wird definiert als:

$$\text{Aufkonz.faktor} = \frac{\text{Sulfat in ML V4 (g/l)}}{\text{Sulfat in Reinsole (g/l)}} \tag{26}$$

Um die gewünschte Sulfat-Konzentration in der Mutterlauge V4 zu erhalten, muß die Reinsole um den Aufkonzentrierungsfaktor aufkonzentriert werden. Der Massenstrom der ML V4 wird deshalb folgendermaßen berechnet:

$$\text{Massenstrom ML V4 (t/h)} = \frac{\text{Massenstrom Reinsole (t/h)}}{\text{Aufkonzentrierungsfaktor}} \tag{27}$$

Die in jedem Verdampfer auskristallisierenden Salzmengen werden über folgende Annahmen berechnet:

Die Mutterlauge verläßt den Verdampfer 4 mit einer Sättigungskonzentration von 300 g NaCl pro kg $H_2O$ (Verfahrensparameter). Die mit dieser Mutterlauge transportierte Salzmenge beträgt also 30% der transportierten Wassermenge. Rechnet man diese Salzmenge von der in der Reinsole enthaltenen Salzmenge ab, so erhält man die in allen Verdampfern insgesamt auskristallisierende Salzmenge (Salzausbeute). Diese Gesamtmenge wird über die Ausdampfungsanteile (siehe unten) auf die einzelnen Verdampfer aufgeteilt. Stoffbilanzen über die einzelnen Verdampfer ergeben die in der jeweiligen Mutterlauge verbleibenden Salzmengen.

Die insgesamt ausdampfende Menge Wasser (Ausdampfung) ergibt sich aus:

$$\text{Ausdampfung (t/h) = Reinsole (t/h) - Gesamt - Salz (t/h) - ML V4 (t/h)} \tag{28}$$

Die Ausdampfungen jedes einzelnen Verdampfers werden über die als Verfahrensparameter anzugebenden Ausdampfungsanteile berechnet:

$$\text{Ausdampfung 1. Verdampfer (t/h)} = \frac{\text{Gesamtausdampfung (t/h) * Ausdampfungsanteil 1. Verdampfer (\%)}}{100}$$

$$\tag{29}$$

Nun kann die Stoffbilanz über den einzelnen Verdampfer erstellt werden:

$$\text{ML V1 (t/h) = Reinsole (t/h) - Salz V1 (t/h) - Ausdampfung (t/h)} \tag{30}$$

Die Dichten der Mutterlaugen jedes Verdampfers werden durch lineare Interpolation berechnet. Sie basieren auf der Dichte der Reinsole und der Dichte der Mutterlauge V3, die als Verfahrensparameter anzugeben sind (Ausdampfungsanteile = AA).

$$\rho_{\text{ML V1}} = \rho_{\text{Reinsole}} + \frac{AA_{v1}}{AA_{v1+}AA_{v2} + AA_{v3}} * \left(\rho_{\text{ML V3}} - \rho_{\text{Reinsole}}\right) \tag{31}$$

$$\rho_{\text{ML V2}} = \rho_{\text{Reinsole}} + \frac{AA_{v1} + AA_{v2}}{AA_{v1+}AA_{v2} + AA_{v3}} * \left(\rho_{\text{ML V3}} - \rho_{\text{Reinsole}}\right)$$

$$\rho_{\text{ML V4}} = \rho_{\text{ML V3}} + \frac{AA_{v4}}{AA_{v1+}AA_{v2} + AA_{v3}} * \left(\rho_{\text{ML V3}} - \rho_{\text{Reinsole}}\right)$$

Die Zusammensetzung der Mutterlauge:

Die Berechnung der Zusammensetzung der Mutterlauge beruht auf folgenden Annahmen:

1) Als Nebensalze fallen nur $SO_4^{2-}$, $K^+$ und $Br^-$ aus.

2) Das ausgeschleuste Salz ist wasserfrei (siehe verbesserungsvorschläge).

Beide Annahmen wurden gemacht, weil detaillierte Informationen bisher fehlen.

Mutterlauge des Verdampfers 1:

Die Massenströme an Ca, OH, und $CO_3$ wurden von der Reinsole übernommen, da diese Ionen nach der zuvor getroffenen Annahme nicht im Salz enthalten sind.
Die Massenströme an K, $SO_4$ und Br sind die Differenz aus den Massenströmen dieser Ionen in der Reinsole und den Masseverlusten dieser Ionen im auskristallisierten Salz (siehe Berechnung der Salzqualitäten).
Die Menge an NaCl ist um das NaCl im auskristallisierten Salz vermindert. Das aus der Lösung entfernte Chlorid wird über das Molmassenverhältnis aus dem ausfallenden NaCl berechnet.
Die Menge an $H_2O$ ist um die Ausdampfung vermindert.
Aus den Massenströmen werden die Konzentrationen der gelösten Stoffe in g/kg berechnet.

$$\text{Konzentmdon (g/kg)} = \frac{\text{Massenstrom (kg/h)}}{\text{Gesamtmassenstrom der Mutterlauge (t/h)}} \tag{32}$$

Berechnung der Salzqualitäten:

Der Gehalt des Salzes an K, $SO_4$ und Br ist proportional zu den Konzentrationen dieser Ionen in der Mutterlauge. Die Proportionalitätsfaktoren sind anzugebende Verfahrensparameter.

$$\text{K im Salz (mg/kg)} = \text{K in Mutterlauge (g/kg)} * \text{Prop.faktor(K-ML/Salz)} \tag{33}$$

SO4 und Br im Salz werden analog berechnet.
Die Massenströme der Nebensalze im auskristallisierten Salz ermittelt man nach

$$\text{K im Salz (kg/h)} = \frac{\text{K\_Konz.im Salz (mg/kg)} * \text{Salzmenge(t(h)}}{1000} \tag{34}$$

Der Gehalt der Mutterlauge an K, $SO_4$ und Br muß um diese Massenverluste korrigiert werden.
Dies hat Rückwirkungen auf die Konzentrationen dieser Ionen in der Mutterlauge und damit wieder auf die Konzentrationen im Salz. Es entsteht hier also eine Programmschleife, die durch Iteration bis zu einem konstanten Wert berechnet wird.
Die Konzentrationen von K, $SO_4$ und Br nach dem Waschen in der Zentrifuge werden ebenfalls berechnet. Dies geschieht mittels Proportionalitätsfaktoren, die als Verfahrensparameter anzugeben sind.

$$K \text{ im Salz nach Waschen (mg/kg)} = \frac{K \text{ im Salz vor dem Waschen (mg/kg)}}{\text{Prop.faktor (K\_Salz/gewaschen)}} \qquad (35)$$

$SO_4$ und Br werden analog berechnet.

Berechnung der weiteren Verdampfer:

Die weiteren Verdampfer werden analog zum Verdampfer 1 berechnet. Das Programm geht aber natürlich nicht von der Reinsole, sondern von den Mutterlaugen der jeweils vorhergehenden Verdampfer aus.

Anmerkung:

Durch die Korrektur der Massenbilanz um die mit dem Salz ausgeschleusten Nebensalze wird der Zielwert der Sulfat-Konzentration in der Mutterlauge V4 (31,75 g/kg) geringfügig verfehlt.

## 4. Berechnung der ausgeschleusten und der rückgeführten Mutterlauge (Verfahren ohne Nanofiltration)

Nach der Ermittlung der Zusammensetzung der Mutterlauge V4 wird nochmals die Verdampfer-Gesamtstatistik benutzt. Die Menge.an ausgeschleuster bzw. rückgeführter Mutterlauge und damit der Rückführungsanteil wird durch den rückzuführenden Massenstrom an Sulfat bestimmt. Es muß nämlich ein Großteil des Sulfats rückgeführt werden, um in den Fällungsstufen die maximale Menge an Gips zu fällen und daher minimalen Chemikalienverbrauch (Natriumcarbonat) zu erzielen.
Der rückzuführende Massenstrom an Sulfat ist als Verfahrensparameter anzugeben.
Danach wird der Rückführungsanteil (Anteil der rückgeführten Mutterlauge an der gesamten Mutterlauge) berechnet.

$$\text{Rückführungsanteil (\%)} = \frac{\text{Rückgeführtes SO4 (kg/h)}}{\text{SO4 in ML V4 (kg/h)}} * 100 \qquad (36)$$

Mit dem Rückführungsanteil und der Gesamt-Menge an Mutterlauge können die Menge an ausgeschleuster und die Menge an rückgeführter Mutterlauge berechnet werden.
Die Zusammensetzung von ausgeschleuster und rückgeführter Mutterlauge ist exakt die gleiche wie in der Gesamt-Mutterlauge (ML V4) .
Die rückgeführte Mutterlauge geht in den 1.Fällungsbehälter zurück (Neuberechnung sämtlicher Werte des Programms durch Iteration).

## 5. Nanofiltrationsstufe

Das Verfahren mit Nanofiltrationsstufe funktioniert bis zur Mutterlauge V4 genauso wie das Verfahren ohne Nanfiltration. Durch die Nanofiltration wird dann jedoch der Großteil des Sulfats zurückgehalten, während K und Br durch die Membran permeieren. Die Zusammensetzungen von Permeat und Retentat sind daher unterschiedlich.
Verfahrensparameter der Nanofiltration sind:

1) Der Konzentrierungsfaktor $n$, der den Rückführungsanteil ersetzt

$$\text{Konzentrierungsfaktor} = \frac{1}{\text{Rückführungsanteil}} = \frac{\text{Menge an Mutterlauge (Feed)}}{\text{Retentat - Menge}} \qquad (37)$$

2) Weiters die (scheinbaren) Rückhalte R der verwendeten Membran für Ca, K, OH, CO3, SO4, Cl und Br. Der Rückhalt von NaCl wurde dem Rückhalt von Cl- gleichgesetzt.

Im verwendeten Bereich für den Konzentrierungsfaktor werden die Rückhalte als konstant angesehen.
Der Massenstrom an zurückgeführtem Retentat errechnet sich aus:

$$\text{Retentat (t/h)} = \frac{\text{Mutterlauge (t/h)}}{\text{Konzentrierungsfaktor}} \qquad (38)$$

Der Massenstrom an ausgeschleustem Permeat errechnet sich aus:

$$\text{Permeat (t/h)} = \text{Mutterlauge (t/h)} - \text{Retentat (t/h)} \tag{39}$$

Die Dichte des Retentats wurde der Dichte der Mutterlauge gleichgesetzt.

Die Konzentrationen der Ionen im Retentat ($c_1$) wurden aus den Feed-Konzentrationen ($c_0$) mit folgender Formel berechnet:

$$c_1 = c_0 * \frac{n}{n - R(n\text{-}1)} \tag{40}$$

Die Massenströme an gelösten Stoffen werden folgendermaßen berechnet:

$$\text{Massenstrom (kg/h)} = \text{Konzentration (g/kg)} * \text{Massenstrom an Retentat (t/h)} \tag{41}$$

Die Konzentration von Wasser im Retentat wurde der Konzentration von Wasser im Feed gleichgesetzt. Die Massenströme der einzelnen Stoffe im Permeat sind die Differenz der Massenströme im Feed und im Retentat. Sie werden mit Gleichung (32) in Konzentrationen umgerechnet. Das Retentat dieser Stufe wird wie die rückgeführte Mutterlauge im Verfahren ohne Nanfiltration in den 1. Fällungsbehälter rückgeführt und alle Werte des Programms iterativ neu berechnet, bis die Werte konstant bleiben.
Das Permeat wird ausgeschleust und die Salzqualitäten verbessern sich dadurch deutlich.

**Patentansprüche**

1. Verfahren zur Aufbereitung von Salzsole zur Gewinnung von Alkalihalogenid(en),
   **dadurch gekennzeichnet, daß**

   (a) zweiwertige Kationen durch einen oder mehrere Fällungsschritte aus der Salzsole abgeschieden werden,
   (b) die germäß (a) vorbebandelte Salzsole einer Ein- oder Mehrstufenverdampfung untetzogen wird,
   (c) die bei (b) auftretende Mutterlauge durch Nano-filtration in Retentat und Permeat aufgetrennt wird, wobei
   (d) das Retentat als Fällungsagens bei (a) eingesetzt wird.

2. Verfahren nach Anspruch 1, **dadurch gekennzeichnet, daß** das gemäß (c) abgetrennte Permeat einem oder mehreren weiteren Nanofiltrationsschritt(en) zugeführt wird.

3. Verfahren nach Anspruch 1 oder 2, **dadurch gekennzeichnet, daß** das abgetrennte Permeat einer Ein- oder Mehrstufenverdampfung unterzogen wird.

4. Verfahren nach einem der Ansprüche 1 bis 3, **dadurch gekennzeichnet, daß** das nanofiltrierte Permeat eine gegenüber der Mutterlauge erniedrigte Konzentration an zweiwertigen Anionen, insbesondere Sulfatanionen, aufweist.

5. Verfahren nach Anspruch 4, **dadurch gekennzeichnet, daß** der Membranrückhaltekoeffizient R der Nanofiltrationsmembran für Sulfatanionen $\geq 90\%$, insbesondere $\geq 95\%$ ist.

6. Verfahren nach einem der Ansprüche 1 bis 5, **dadurch gekennzeichnet, daß** der bei (b) auftretenden Mutterlauge vor dem (den) Nanofiltrationsschritt(en) Salzsole, insbesondere gemäß (a) behandelte Salzsole, Brüden aus der (den) Verdampfungsstufe(n) und/oder Kondensat aus der (den) Verdampfungsstufe(n) hinzugefügt wird.

7. Verfahren nach einem der Ansprüche 1 bis 6, **dadurch gekennzeichnet, daß** Rohsalzsole zur Gewinnung von Natrium- und/oder Kaliumchlorid aufbereitet wird.

8. Verfahren nach einem der Ansprüche 1 bis 7, **dadurch gekennzeichnet, daß** das gemäß Verfahrensschritt (b) in den Verdampfungsanlagen erhaltene Alkalihalogenid Natriumchlorid ist und einen Reinheitsgrad von mehr als 95%, insbesondere von mehr als 99%, ganz besonders von mehr als 99,5% aufweist.

9. Verfahren nach einem der Ansprüche 1 bis 8, **dadurch gekennzeichnet, daß** der Trennschritt (c) mit gemäß Verfahrensschritt (b) erhaltenen Mutterlaugen durchgeführt wird, deren Konzentrationen an anorganischen Salzen nahe der Sättigungsgrenze liegen.

10. Verfahren nach einem der Ansprüche 1-9, **dadurch gekennzeichnet, daß** durch den Trennschritt (c) die in der Mutterlauge gemäß (b) enthaltene Bromidkonzentration gegen den Konzentrationsgradienten im Permeat angereichert wird, wobei die Chloridkonzentration in der Mutterlauge mindestens das 10fache der Bromidkonzentration beträgt.

**Claims**

1. A process for the treatment of salt brine to isolate alkali metal halide(s), **characterised in that**

   (a) divalent cations are removed from the salt brine by one or more precipitation steps,
   (b) the salt brine pretreated according to (a) is subjected to single- or multi-stage evaporation,
   (c) the mother liquor arising in (b) is separated by nanofiltration into a retentate and a permeate, wherein
   (d) the retentate is used as a precipitating agent in (a).

2. A process according to claim 1, **characterised in that** the permeate separated according to (c) is input into one or more further nanofiltration step(s).

3. A process according to claim 1 or 2, **characterised in that** the separated permeate is subjected to single- or multi-stage evaporation.

4. A process according to one of claims 1 to 3, **characterised in that** the nanofiltered permeate has a concentration of divalent anions, in particular sulfate anions, which is reduced relative to the mother liquor.

5. A process according to claim 4, **characterised in that** the membrane retention coefficient R of the nanofiltration membrane for sulfate anions is ≥90%, in particular ≥95%.

6. A process according to one of claims 1 to 5, **characterised in that**, before the nanofiltration step(s), salt brine, in particular salt brine treated according to (a), vapours from the evaporation stage(s) and/or condensate from the evaporation stage(s), is added to the mother liquor arising in (b).

7. A process according to one of claims 1 to 6, **characterised in that** the crude salt brine is treated in order to isolate sodium and/or potassium chloride.

8. A process according to one of claims 1 to 7, **characterised in that** the alkali metal halide obtained according to process step (b) in the evaporation installations is sodium chloride which exhibits a degree of purity of greater than 95%, in particular of greater than 99%, most particularly of greater than 99.5%.

9. A process according to one of claims 1 to 8, **characterised in that** the separation step (c) is performed with mother liquors obtained according to process step (b), which have inorganic salt concentrations approaching the saturation limit.

10. A process according to one of claims 1-9, **characterised in that**, in the separation step (c), the bromide concentration in the mother liquor obtained according to (b) is increased against the concentration gradient in the permeate, wherein the chloride concentration in the mother liquor is at least 10 times the bromide concentration.

**Revendications**

1. Procédé de préparation de saumure pour l'obtention d'halogénure(s) alcalin(s), **caractérisé en ce que**

   (a) des cations divalents sont déposés par le biais d'une ou de plusieurs étapes de précipitation à partir de la saumure,
   (b) la saumure traitée au préalable selon (a) est soumise à une évaporation en une seule ou plusieurs étapes,
   (c) la lessive mère intervenant au (b) est séparée par nanofiltration en rétentat et perméat,

(d) le rétentat étant utilisé au (a) en tant qu'agent dé précipitation.

2. Procédé selon la revendication 1, **caractérisé en ce que** le perméat séparé selon (c) est amené à une ou plusieurs autres étapes de nanofiltration.

3. Procédé selon la revendication 1 ou 2, **caractérisé en ce que** le perméat séparé est soumis à une évaporation en une seule ou plusieurs étapes.

4. Procédé selon l'une quelconque des revendications 1 à 3, **caractérisé en ce que** le perméat nanofiltré présente une concentration amoindrie, par rapport à la lessive mère, en anions divalents, en particulier en anions de sulfate.

5. Procédé selon la revendication 4, **caractérisé en ce que** le coefficient de rétention membranaire R de la membrane de nanofiltration pour les anions sulfate est $\geq$ 90 %, en particulier $\geq$ 95 %.

6. Procédé selon l'une quelconque des revendications 1 à 5, **caractérisé en ce que** la lessive mère intervenant au (b) avant la ou les étapes de nanofiltration de la saumure, en particulier de la saumure traitée selon le (a), est additionnée de buées provenant de ou des étapes d'évaporation et/ou de condensat provenant de ou des étapes d'évaporation.

7. Procédé selon l'une des revendications 1 à 6, **caractérisé en ce que** la saumure brute est préparée pour l'obtention de chlorure de sodium et/ou de calcium.

8. Procédé selon l'une des revendications 1 à 7, **caractérisé en ce que** l'halogénure alcalin obtenu dans les installations d'évaporation selon l'étape de procédé (b) est le chlorure de sodium et qu'il présente un degré de pureté de plus de 95 %, en particulier de plus de 99 %, tout particulièrement de plus de 99,5 %.

9. Procédé selon l'une des revendications 1 à 8, **caractérisé en ce que** l'étape de séparation (c) est réalisée avec les lessives mères obtenues selon l'étape de procédé (b), dont les concentrations en sels inorganiques sont proches du seuil de saturation.

10. Procédé selon l'une quelconque des revendications 1 à 9, **caractérisé en ce que** la concentration de bromure obtenue selon (b) dans la lessive mère est enrichie en gradients de concentrations dans le perméat grâce à l'étape de séparation (c), la concentration en chlorure de la lessive mère atteignant au moins 10 fois la concentration en bromure.

Fig. 1

EP 1 202 931 B1

| 10,0 | kg/h | Mutterlauge |
|---|---|---|

| 0,7 | g Br/kg | 7,1 g Br/h |
| 41,5 | g Sulfat/kg | 415 g Sulfat/h |
| 23,9 | g K/kg | 239 g K/h |
| 208,6 | g NaCl/kg | 2.085 g NaCl/h |

0,017 kg Br/ kg Sulfat

0,575 kg K/ kg Sulfat

**Kondensat**
**1,4 kg/h**

| 7,6 kg/h |
|---|
| Retentat zurück zum Zulauf |

Feed  11,4 kg/h

| NANOFILTRATION | | |
|---|---|---|
| Desal 5 | CF | 1,5 |
| | 30,0 | bar |
| R- Br | | -8% |
| R- Sulfat | | 99% |
| R- K | | 10% |
| R- NaCl | | 1% |

| 0,0 g Br/kg | 0,622 g Br/kg | 7,1 g Br/h |
| 0,0 g Sulfat/kg | 36,23 g Sulfat/kg | 415 g Sulfat/h |
| 0,0 g K/kg | 20,85 g K/kg | 239 g K/h |
| 0,0 g NaCl/kg | 182,26 g NaCl/kg | 2.085 g NaCl/h |

| 0,61 g Br/kg | 4,62 g Br/h |
| 54,1 g Sulfat/kg | 413 g Sulfat/h |
| 21,6 g K/kg | 165 g K/h |
| 182,9 g NaCl/kg | 1.395 g NaCl/h |

| 0,011 kg Br/ kg Sulfat | 65,3% |
| 0,399 kg K/ kg Sulfat | 69,3% |

0,0 g Br/h
0,0 g Sulfat/h
0 g K/h
0 g NaCl/h

| 0,655 g Br/kg | 2,5 g Br/h | 35,1% |
| 0,5 g Sulfat/kg | 2 g Sulfat/h | 0,5% |
| 19,4 g K/kg | 74 g K/h | 31,0% |
| 180,9 g NaCl/kg | 690 g NaCl/h | 33,1% |

1,21 kg Br/ kg Sulfat

35,90 kg K/ kg Sulfat

| 3,8 kg/h |
|---|
| Permeat zur Ableitung |

Fig. 2

**10,0    kg/h    Mutterlauge**

| | |
|---|---|
| 0,7 g Br/kg | 7,2 g Br/h |
| 37,4 g Sulfat/kg | 374 g Sulfat/h |
| 24,1 g K/kg | 241 g K/h |
| 211,6 g NaCl/kg | 2.116 g NaCl/h |

**Reinsole 4,2 kg/h**

0,019 kgBr/kgSulfat

**10,6 kg/h Retentat zurück zum Zulauf**

0,644 kgK/kgSulfat

Feed    14,2 kg/h

| | | |
|---|---|---|
| 0,1 g Br/kg | 0,546 g Br/kg | 7,7 g Br/h |
| 5,6 g Sulfat/kg | 28,04 g Sulfat/kg | 398 g Sulfat/h |
| 3,7 g K/kg | 18,06 g K/kg | 256 g K/h |
| 249,7 g NaCl/kg | 222,81 g NaCl/kg | 3.159 g NaCl/h |

**NANOFILTRATION**

| Desal 5 | CF | 1,34 |
|---|---|---|
| | 30,0 bar | |
| R- Br | | -8% |
| R- Sulfat | | 99% |
| R- K | | 10% |
| R- NaCl | | 1% |

| | |
|---|---|
| 0,53 g Br/kg | 5,66 g Br/h |
| 37,4 g Sulfat/kg | 396 g Sulfat/h |
| 18,5 g K/kg | 196 g K/h |
| 223,4 g NaCl/kg | 2.364 g NaCl/h |

| | |
|---|---|
| 0,014 kgBr/kgSulfat | 73,8% |
| 0,495 kgK/kgSulfat | 76,9% |

0,5 g Br/h
23,5 g Sulfat/h
15 g K/h
1.044 g NaCl/h

| | | |
|---|---|---|
| 0,578 g Br/kg | 2,1 g Br/h | 26,9% |
| 0,4 g Sulfat/kg | 1,3 g Sulfat/h | |
| 16,7 g K/kg | 60 g K/h | 23,4% |
| 221,0 g NaCl/kg | 795 g NaCl/h | |

1,54 kgBr/kgSulfat

44,55 kgK/kgSulfat

**3,6 kg/h Permeat zur Ableitung**

EP 1 202 931 B1

Fig. 3

$Fig.4$

Kondensat (oder Reinsole)

12.5 t/h          60 t/h

Mutterlauge
69 t/h

Feed 81,5 t

(mit Reinsole 129 t)

Nanofiltration

Retentat 54,2 t/h
(bei Reinsole 84,3 t)

zur Solereinigung

Permeat zum Verdampfer 4     27,3 t/h
(bei Verdampfung mit Reinsole 42,8 t/h)

|     | g/kg   | t/h   |
|-----|--------|-------|
| SO4 | 43,07  | 2972  |
| K   | 23,52  | 1623  |
| Br  | 0,698  | 48    |
| CO3 | 0,972  | 67    |
| NaCl| 207,62 | 14326 |

|     | g/kg   | t/h  |
|-----|--------|------|
| SO4 | 54,73  | 2966 |
| K   | 20,62  | 1118 |
| Br  | 0,576  | 31   |
| CO3 | 1,240  | 67   |
| NaCl| 174,67 | 9467 |

|     | g/kg  | t/h  |
|-----|-------|------|
| SO4 | 0,22  | 6    |
| K   | 18,50 | 505  |
| Br  | 0,62  | 17   |
| CO3 | 0,01  | 0    |
| NaCl| 178,0 | 4859 |

| Salzqualität V1 | | |
|-----|---------|--------|
|     | ohne NF | mit NF |
| SO4 | 104     | 108    |
| K   | 247     | 127    |
| Br  | 56      | 24     |

EP 1 202 931 B1